# EUROPÄISCHE PATENTSCHRIFT

(11) **EP 1 562 751 B1**
(45) Veröffentlichungstag und Bekanntmachung des Hinweises auf die Patenterteilung: **02.01.2013**
(21) Anmeldenummer: 03811323.9
(22) Anmeldetag: 20.11.2003
(51) Int. Cl.: C09J 5/00, B32B 7/04

(54) **VERFAHREN ZUR HERSTELLUNG EINES BAUTEILS**
METHOD FOR PRODUCING A COMPONENT
PROCEDE DE PRODUCTION D'UN COMPOSANT

(30) Priorität: 20.11.2002 CH 194302
(43) Veröffentlichungstag der Anmeldung: 17.08.2005
(73) Patentinhaber: Biolink Gesellschaft für Verbindungstechnologien mbH, 83666 Waakirchen (DE); LKT GmbH, 52068 Aachen (DE)
(72) Erfinder: BUTZEK, Jochen, CH-8645 Jona (CH); EHRIG, Frank, CH-8645 Jona (CH); AHLBORN, Norbert, CH-8006 Zürich (CH); VOGEL, Wolf-Dieter, 83670 Bad Heilbrunn (DE); LINDNER, Edgar, 83661 Lenggries (DE); DILGER, Klaus, 38106 Braunschweig (DE); REIMERS, Jan-Dirk, 53068 Aachen (DE)
(74) Vertreter: Detken, Andreas
(86) Internationale Anmeldenummer: PCT/CH2003/000766
(87) Internationale Veröffentlichungsnummer: WO 2004/045853

(56) Entgegenhaltungen:
- WO-A-00/44807
- WO-A-99/55794
- WO-A2-02/066571
- US-A- 4 388 128
- US-A- 5 478 781
- US-A- 5 691 567
- US-A- 6 017 776
- US-A1- 2001 055 837
- US-B1- 6 387 728
- PATENT ABSTRACTS OF JAPAN vol. 018, no. 668 (C-1289), 16. Dezember 1994 (1994-12-16) & JP 06 264043 A (NIPPON ZEON CO LTD), 20. September 1994 (1994-09-20)

## Beschreibung

Die Erfindung betrifft ein Verfahren gemäss Oberbegriff des Anspruchs 1. Die Erfindung betrifft zudem einen Körper zur Herstellung eines solchen Bauteils sowie ein nach dem Verfahren hergestelltes Bauteil.

Bauteile werden in Industrie und Handwerk zunehmend durch Kleben befestigt. Beispielsweise können damit im Automobilbau Kunststoffteile sehr einfach und günstig montiert werden. Zum Kleben der Bauteile werden zweiseitig mit einem Haftklebstoff versehene Klebebänder, Transferklebebänder und Haftklebstoffstanzware verwendet. Solche Haftklebebänder für technologisch anspruchsvolle Fügeaufgaben müssen mit einem sehr hochwertigen Haftklebstoff hergestellt werden, nur sie erreichen ausreichende Festigkeiten der Verklebung. Die Herstellung ist jedoch sehr aufwändig und erfolgt auf zumeist teuren, unflexiblen Großanlagen in Massenproduktion, da unter anderem auch unter Sauerstoffausschluss gearbeitet werden muss. Als Haftklebstoffe werden hier Stoffe verstanden, die permanent klebrig und klebfähig bleiben. Sie haften bei leichtem Anpressdruck sofort auf fast allen Oberflächen. Der Stand der Technik auf dem Gebiet des Haftklebens wird z.B. in I. Benedek, L. J. Heymans, "Pressure Sensitive Adhesive Technology", Marcel Decker Inc., 1. Auflage 1997 wiedergegeben. Basispolymere der modernen Haftklebstoffe sind vorwiegend Polyacrylate, Natur- und Synthesekautschuke, Polyester, Polychloropren, Polyisobutene, Polyvinylether, Polyurethane und Polysiloxane, die versetzt mit Zusatzstoffen, wie beispielsweise Harzen, Weichmachern, Füllstoffen und Stabilisatoren, eingesetzt werden.

Das Aufbringen von Klebebändern auf einem Körper ist vergleichsweise aufwändig. Die Klebebänder müssen zugeschnitten und in der Regel genau ausgerichtet werden, bei Stanzware entfällt das Zuschneiden, aber in der Produktion anfallender Mehraufwand verteuert die Herstellung, der Montageaufwand bleibt erhalten. Bei komplexen und insbesondere dreidimensionalen Körpern mit unebener Aussenfläche ist das Aufbringen von Klebebändern oder Klebebandstanzware sehr schwierig oder meist sogar unmöglich. Insbesondere Erhebungen und Vertiefungen sowie schmale Ränder können mit Klebebändern nicht abgedeckt werden. In solche Fällen muss das Bauteil wie bisher üblich beispielsweise aufgeschraubt oder aufgerastet werden. Es besteht das Problem, dass derartige Bauteile nicht sinnvoll im Rahmen einer modernen Fertigung mit Haftklebstoffen gefügt werden können.

Selbst bei einfachen, planen Bauteilen besteht das Problem, dass beim Entfernen des Liners, welcher fertigungsbedingt nicht über die Klebfläche hinaussteht, sehr viel Zeit verloren gehen kann. Bei bisher eingesetzten Montageaufgaben muss bei zeitkritischen Aufgaben (Produktionstakt) eine Anfasshilfe zum Entfernen des Liners vorgesehen werden, dies ist sehr teuer, da es im Vorfeld von Hand geschehen muss.

Bekannte Haftklebesysteme können zum einen aus den genannten Gründen nicht verwendet werden, zum anderen sind die bekannten Herstellungstechniken nicht in der Lage flexibel genug auf die Anforderungen bei Kleinserienfertigung zu reagieren, als dass dem Anwender der jeweilig geeignete Haftklebstoff zu einem vertretbaren Preis zu Verfügung stehen würden.

Die gattungsbildende WO-A-02066571 beschreibt ein Verfahren und mögliche Klebstoffrezepturen zum Aufbringen flüssiger Haftklebstoffe auf unterschiedliche Substrate wobei der Haftklebstoff in unterschiedlichen Mustern aufgebracht werden kann. Die Applikation erfolgt in einem Druckverfahren, das technologisch an das Tintenstrahldrucken angelehnt ist. Dies bedeutet, dass durch die Druckerhöhung in Kammern mit begrenztem Volumen eventuell kombiniert mit einer Ventilöffnung ein Fluid mit vergleichsweise hoher Geschwindigkeit aus einer Düse ausgebracht wird. Das Fluid bildet nach dem Verlassen der Düse eine tropfenförmige Struktur, die einen gewissen Weg bis zum Applikationsort zurücklegen kann, wo das Fluid durch die verbleibende kinetische Energie mehr oder weniger benetzt. Voraussetzung für den dargestellten Prozess ist ein sehr definiertes rheologisches Verhalten des Klebstoffs, da die Strömung durch die Düse und der Abriss des Fluids vom Düsenrand entscheidend für die Qualität der Applikation sind. Beschrieben werden auch mögliche, aus der dargestellten chemischen Zusammensetzung der Haftklebstoffe resultierende, Aushärtemethoden, um die applizierten noch niederviskosen Klebstofffilme in funktionsfähige Haftklebstoffschichten umzuwandeln. In diesem Dokument wird folglich eine mögliche Art der Applikation flüssiger Haftklebstoffe in unterschiedlichen Mustern beschrieben, wobei auf chemische Zusammensetzung, Rheologie und Aushärtung fokussiert wird. Es wird die Applikation auf ebene Körper beschrieben.

Die WO 00/44807 offenbart einen mit Siliconkautschuk elastifizierten einkomponentigen Epoxidharzklebstoff, dessen Fügeoffenzeit anpassbar ist. Die Fügeoffenzeit ist die Zeitspanne, in welcher der Klebstoff flüssig bleibt. Diese beträgt hier etwa 1 bis 3 Stunden. Damit ein Klebverbund die maximale Festigkeit erhält, wird eine thermische Nachhärtung vorgenommen. Werkstücke können mit einem solchen Epoxidharzklebstoff vorfixiert werden und benötigen während der thermischen Nachhärtung keine zusätzliche Halterung. Es handelt sich hier somit um einen Klebstoff mit zwei unterschiedlichen Härtungsmechanismen. Einerseits kann der Klebstoff ganz oder partiell über eine Bestrahlung ausgehärtet werden und andererseits kann die Vernetzung durch eine thermische Härtung erfolgen. Die Strahlungshärtung dient zur schnellen Erzielung einer gewissen Anfangsfestigkeit. Die Herstellung der Klebung erfolgt durch die Vernetzung des Klebstoffs.

Die US-A-2001055.837 und die US-A-6,017,776 betreffen Verfahren, bei denen ein flüssiger Klebstoff in bestimmten Mustern auf ein Bauteil aufgetragen und vorgehärtet wird, damit das Muster erhalten bleibt. Nach dem Fügen erfolgt die Ausbildung der Klebung durch einen weiteren Aushärte - / Vernetzungsvorgang.

Die JP-A-06264043 betrifft ein Verfahren, bei dem ein flüssiger Klebstoff aufgetragen und zu seiner Stabilisierung vorgehärtet (semicured) wird. Die Ausbildung der Klebung erfolgt durch die vollständige Vernetzung der Klebstoffschicht nach dem Fügen (thermally curing the layer).

Die US-B-6,387,728 offenbart eine mehrstufige auch partielle Aushärtung eines herkömmlichen Klebstoffs. Es handelt sich nicht um einen Haftklebstoff. Die partielle, mehrstufige Vernetzung dient zur besseren Verarbeitungsmöglichkeit des Klebstoffs. Der Klebstoff liegt im fertigen Produkt als vollvernetzte Klebschicht vor. Während des Klebvorgangs erfolgt eine chemische Veränderung der Klebschicht durch Vernetzung. Das beschriebene Verfahren führt zu einem herkömmlichen Epoxidharzklebstoff.

Die US-A-4388128 offenbart einen Klebstoff, der in zwei Stufen mit unterschiedlichen Anregungen vernetzt werden kann. In einer ersten Stufe wird die Vernetzung durch eine UV-Bestrahlung ausgelöst, was eine schnelle Fixierung der Bauteile gewährleistet. In einer zweiten Stufe erfolgt die endgültige Aushärtung der Klebschicht durch Wärmeeinwirkung. Auch hier erfolgt die Ausbildung der Klebung durch eine Vernetzung, die partielle Aus- / Anhärtung dient zur Fixierung der Bauteile.

Die US-A-5,478,781 offenbart eine zweistufige bzw. partielle Vernetzung zur Fixierung und Optimierung eines Verarbeitungsprozesses. Auch hier wird die endgültige Klebung durch eine Vernetzung hergestellt.

Die WO-A-9955794 betrifft einen vorbeschichtbaren Scheibenklebstoff der nach der Vorbeschichtung bis zum Aufbringen der Scheiben in dieser Form über einen gewissen Zeitraum lagerbar sein muss ohne zu vernetzen. Erwähnt ist ein Zeitraum von 5 Tagen. Nach dem Fügen erfolgt die Ausbildung der Klebung innerhalb von 10 Minuten (besser 3 Minuten) durch Vernetzung der Klebschicht. Diese Vernetzung wird durch die Freisetzung von Katalysatoren bzw. "curing agents" hervorgerufen. Diese Freisetzung kann auf unterschiedliche Art und Weise erfolgen. Es handelt sich also auch hier um die Ausbildung einer Klebung unter Vernetzung nach dem Fügen. Erwähnt ist eine gewisse "green strength" die notwendig ist, um die Scheiben vor der Aushärtung zu fixieren.

Der Erfindung liegt die Aufgabe zugrunde, ein Verfahren der genannten Art zu schaffen, das eine einfachere und kostengünstigere Herstellung von Bauteilen ermöglicht, die wenigstens bereichsweise ein Haftklebstoffsegment aufweisen und durch Kleben montiert werden können. Das Verfahren soll auch die Herstellung von Bauteilen mit unebener Oberfläche ermöglichen. Der Haftklebstoff soll zudem eine vergleichsweise hohe Festigkeit besitzen.

Die Aufgabe ist mit einem Verfahren gemäss Anspruch 1 gelöst. Beim erfindungsgemässen Verfahren wird auf den Körper eine Haftklebstoffbasis aufgetragen. Die Oberfläche des Körpers kann vor dem Auftragen der Haftklebstoffbasis durch eine Oberflächenbehandlung (z.B. Beflammen, Coronabehandlung, Plasmabehandlung, etc.) zur Haftungsverbesserung modifiziert werden. Diese Haftklebstoffbasis besitzt in der Regel eine geringe Viskosität und kann beispielsweise mit einer Breitschlitzdüse oder durch Sprühen aufgetragen werden. Es können hier auch unebene Flächen, beispielsweise Vertiefungen oder Vorsprünge mit einer solchen Haftklebstoffbasis beschichtet werden. Aufgrund der vergleichsweise geringen Viskosität kann die Haftklebstoffbasis auch in Vertiefungen eindringen bzw. die Werkstoffoberfläche gut benetzen. Nach dem Auftragen der Haftklebstoffbasis wird diese vernetzt, bis eine vorbestimmte Viskosität erreicht ist. Das Vernetzen erfolgt beispielsweise durch Bestrahlen oder durch Erwärmen. Nach dem definierten teilweisen oder vollständigen Vernetzen ist der Körper mit einer konturgenauen Klebstoffschicht oder einem Klebstofffilm versehen, der eine vergleichsweise hohe mechanische Stabilität besitzt und/oder eventuell auch plastisch verformbar ist. Das Bauteil kann nun in einfacher Weise montiert werden, indem es mit leichtem Anpressdruck an das vorgesehene Teil angelegt wird. Weitere Befestigungsmittel sind in der Regel nicht erforderlich, können aber ohne weiteres vorgesehen sein. Eine solche Befestigung kann in der Regel automatisiert werden. Auch das Aufbringen der Haftklebstoffbasis sowie das Vernetzen können automatisiert werden. Das Verfahren eignet sich deshalb für Klein- als auch für Grossserien. In einem flexiblen Prozess bezüglich Haftklebstoffauswahl und Auftrag können erfindungsgemäss viele konventionelle Verarbeitungsschritte der Haftklebband- bzw. Stanzwarenherstellung eingespart werden, die sich in den Fertigungskosten abzeichnen, wobei für den Anwender diverse Freiheitsgrade erhalten bleiben.

Nach einer Weiterbildung der Erfindung wird die Haftklebstoffbasis direkt auf den Körper aufgetragen. Dies erfolgt beispielsweise mit einer steuerbaren Breitschlitzdüse oder durch einen punktförmigen Auftrag mittels Piezodüse.

Nach einer Weiterbildung der Erfindung ist vorgesehen, dass die Haftklebstoffbasis durch eine Schutzfolie (Liner) hindurch vernetzt wird. Eine solche Schutzfolie ist vorzugsweise transparent. Nach dem Vernetzen bzw. Teilvernetzen ist der Haftklebstoff gegen Verschmutzung oder auch durch chemische Einwirkungen, beispielsweise gegen Oxidation geschützt. Zum Montieren wird dann die Folie abgezogen. Die Schutzfolie kann den Klebstofffilm teilweise, vollflächig oder gar nicht berühren. Der Hohlraum zwischen der Folie und dem Klebstoff kann mit Inertgas gefüllt sein ( z.B. Kohlendioxid oder Stickstoff). Dies ist insbesondere dann wichtig, wenn eine weitere Vernetzungsreaktion nur unter Sauerstoffausschluss stattfinden kann. Die Schutzfolie kann vollflächig oder teilweise selbstklebend sein oder mit einem Klebeband an dem Bauteil befestigt werden.

Nach einer Weiterbildung der Erfindung ist vorgesehen, dass die Haftklebstoffbasis punktförmig oder sektoriell aufgetragen wird. Die einzelnen Punkte bzw. Sektoren können durch unterschiedliche Haftklebstoffe oder Kombinationen aus Haftklebstoff und konventionellen Klebstoffen gebildet sein. Dadurch kann eine besonders hohe Festigkeit und/oder Haftung beim Anpressen erreicht werden, die dadurch für jedes Bauteil spezifisch angepasst und entwickelt werden kann. Die Haftklebstoffe können beispielsweise unterschiedliche physikalisch/technologische Eigenschaften und unterschiedliche geometrische Abmasse aufweisen.

Nach einer Weiterbildung der Erfindung ist vorgesehen, dass die Haftklebstoffbasis mit einem Liner auf den Körper aufgetragen wird. Der Liner besteht vorzugsweise aus einer Folie und einer Schicht der Haftklebstoffbasis. Nach dem Auftragen des Liners kann durch die Folie hindurch vernetzt werden. Die Folie kann in diesem Fall auch gleichzeitig Träger der Haftklebstoffbasis und nach dem Vernetzen ein Schutz gegen Verschmutzung und chemische Einwirkung sein. Vor dem Montieren wird die Folie abgezogen.

Nach einer Weiterbildung der Erfindung ist der Liner bleibend mehrdimensional verformt. Die Verformung ist der Oberfläche nachgebildet, auf welche der Liner aufgetragen wird. Das Verformen des Liners kann beispielsweise durch Tiefziehen erfolgen. Der Auftrag der Haftklebstoffbasis auf dem Liner kann ebenfalls punktförmig bzw. sektoriell sein. Auch hier können unterschiedliche Haftklebstoffe oder Haftklebstoffe in Kombination mit konventionellen Klebstoffen zum Einsatz kommen. Vorzugsweise wird ein Liner verwendet, der eine Oberfläche besitzt, die eine geringe Haftfähigkeit aufweist. Dies ermöglicht ein leichtes Abziehen der Folie nach dem Aufbringen bzw. Vernetzen der Haftklebstoffbasis auf dem Körper.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung erläutert. Es zeigen:
- Figuren 1 - 6: schematisch einzelne Schritte des erfindungsgemässen Verfahrens,
- Figuren 7 - 11: schematische Schritte eines erfindungsgemässen Verfahrens nach einer Variante,
- Figuren 12 - 16: schematisch einzelne Schritte eines erfindungsgemässen Verfahren gemäss einer weiteren Variante,
- Figur 17: schematisch eine Draufsicht auf einen Liner oder Körper und
- Figur 18: ein Schnitt entlang der Linie XVIII-XVIII der Figur 17.

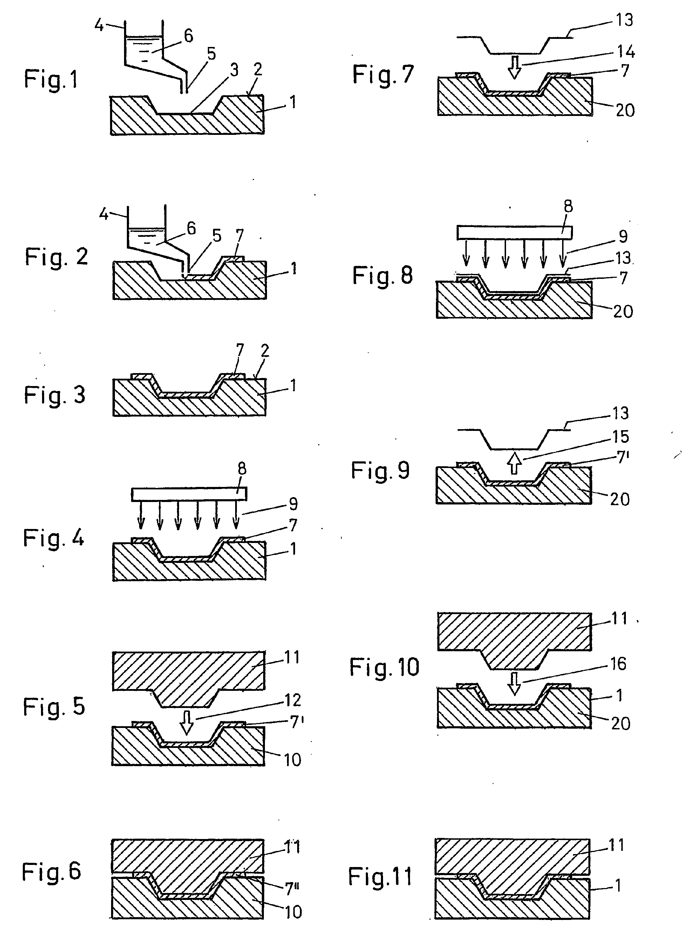

Die Figur 1 zeigt einen Körper 1, beispielsweise ein Spritzgussteil mit einer Oberseite 2, die eine Vertiefung 3 besitzt. Der Körper 1 soll im Bereich der Vertiefung zu seiner Befestigung an einem Teil 11 (Figur 5) mit einem Haftfilm versehen werden. Dazu wird gemäss Figur 2 eine Schicht 7 mit eine Breitschlitzdüse 5 aufgetragen. Die Düse 5 ist mit einem Behälter 4 versehen, in dem sich eine Haftklebstoffbasis 6 befindet. Diese Haftklebstoffbasis 6 wird vorzugsweise gesteuert mit der Breitschlitzdüse 5 gleichmässig aufgetragen, wobei diese Schicht 7 konturgenau an die Vertiefung angepasst wird. Die Breitschlitzdüse 5 kann auch durch eine andere Vorrichtung zum Aufbringen der Haftklebstoffbasis 6 ersetzt sein, beispielsweise kann die Haftklebstoffbasis 6 auf die Oberseite 2 aufgesprüht oder durch Tropfenauftrag aufgebracht werden. Es ist auch ein partieller, sektorieller oder punktförmiger Auftrag möglich, was weiter unten näher erläutert wird.

Die Haftklebstoffbasis 6 kann einen oder mehrere Zuschlagsstoffe enthalten. Die Zuschlagesstoffe sind beispielsweise Füllstoffe, Haftvermittler oder Weichmacher. Ein geeigneter Zuschlagsstoff enthält beispielsweise hohle Glaskugeln. Die Haftklebstoffbasis 6 kann zudem geschäumt sein und kurz vor oder nach dem Auftrag geschäumt werden oder erst nach der Verklebung. Vor dem Auftrag kann die Oberfläche des Körpers 1 zur Haftungsverbesserung modifiziert werden. Hierzu eignet sich insbesondere ein Beflammen oder eine Corona- oder Plasmabehandlung.

Die Figur 3 zeigt die aufgetragene Schicht 7. Diese kann sich auch über die gesamte Oberseite 2 und auch über die anderen Schmal- und Breitseiten des Körpers 1 erstrecken.

Die Haftklebstoffbasis 6 ist vorzugsweise ein haftklebefähiges Prepolymer. Die Haftklebstoffbasis kann ein reaktiv verdünntes System mit einem UV-Initiator und/oder thermisch blockierten Radikalbildnern sein. Es sind aber auch Lösungsmittelsysteme und Hotmelthaftklebstoffe möglich, welche ebenfalls weitere Vernetzungsmöglichkeiten enthalten können. Als Polymere eignen sich insbesondere Acrylate, SIS/SBS-Haftklebstoffe, Polyurethan-Haftklebstoffe und Silikon-Haftklebstoffe. Die Klebstoffe sind aber in jedem Fall vorzugsweise Haftklebstoffpolymere oder Haftklebstoffprepolymere die nicht oder nur teilweise vernetzt sind.

Nach dem Auftrag wird die Schicht 7 gemäss Figur 4 vernetzt. Das Vernetzen erfolgt beispielsweise mit einer Vorrichtung 8, die eine UV-, VIS-, IR-, elektromagnetische oder eine Elektronenstrahlung 9 abgibt. Es ist hier aber auch eine andere Methode zum Einbringen von Energie in die Schicht 7 denkbar. Beispielsweise kann mit Wärme oder chemisch vernetzt werden. Als chemische Vernetzung sind einkomponentige und mehrkomponentige Systeme an sich bekannt, wobei die zweite Komponente auch mittels Mikrokapseln in das System eingebunden sein kann. Vorzugsweise wird die Vernetzungsreaktion mittels UV-Strahlen gestartet. Die weitere Vernetzung, bis die gewünschten Eigenschaften erreicht sind, kann dann ohne Bestrahlung und somit "im Schatten" erfolgen.

Die Haftklebstoffbasis 6 kann mit einem Zusatzstoff versehen sein. Dieser ist insbesondere ein Füllstoff, ein Weichmacher oder ein sogenannter Tackifier, der beispielsweise aus einem Harz hergestellt ist und die Klebrigkeit erhöht. Es können zudem Zusatzstoffe vorgesehen sein, welche äussere Einflüsse, beispielsweise eine mögliche Sauerstoffinhibierung bei der Vernetzungsreaktion verringern oder unterbinden. Die Zusatzstoffe können hohle Glaskugeln oder Glaskugeln aufweisen. Die Haftklebstoffbasis kann geschäumt sein oder zu einem beliebigen Zeitpunkt geschäumt werden. Nach der Vernetzung kann die Haftklebstoffbasis plastisch verformbar sein. Das Vernetzen der Haftklebstoffbasis 6 kann nach einem Einkomponenten- oder Mehrkomponentensystem erfolgen.

Beim Vernetzen der Schicht 7 wird das Molekulargewicht erhöht. Unter Vernetzung wird hier auch eine Kettenverlängerung verstanden. Die Vernetzung bzw. Kettenverlängerung bewirkt eine Erhöhung der Viskosität beispielsweise gemäss dem Dalquist Kriterium. Es gibt hier auch noch andere geeignete Viskositätsstandards. Die vernetzte bzw. teilvernetzte Schicht 7 gemäss Figur 5 ist vorzugsweise plastisch verformbar. Die Viskosität ist so eingestellt, dass die Kriechneigung der Schicht 7' gering ist. Nach dem Vernetzen der Schicht 7 liegt bereits ein montagebereites Bauteil 10 vor. Um dieses mit einem Teil 11 zu verbinden, ist lediglich ein vergleichsweise geringer Anpressdruck in Richtung des Pfeils 12 nötig. Nach dem Anlegen ist das Bauteil 10 aufgrund der hohen Festigkeit der Schicht 7' bereits selbsttragend. Das Bauteil 10 muss somit in der Regel nicht gestützt oder sonst wie am Teil 11 befestigt werden. Nach dem Fügen des Bauteils 10 kann die Schicht 7' weitervernetzen und eine vollständig vernetzte Schicht 7" bilden. Das weitere Vernetzen kann auch beispielsweise durch Strahlung oder durch Erwärmen beschleunigt werden. Auch nach dieser Vernetzung bleibt das Polymer haftklebend. Diese weitere Vernetzung ist nicht zwingend notwendig. Vorzugsweise wird eine ausreichende Klebstofffestigkeit in der ersten Vernetzungsreaktion erreicht.

Bei der Variante gemäss den Figuren 7 bis 11 kann nach dem Auftragen der Schicht 7 in Richtung des Pfeils 14 eine Schutzfolie 13 aufgelegt werden. Diese Schutzschicht 13 kann vorzugsweise transparent oder teiltransparent ausgebildet sein, sodass gemäss Figur 8 durch diese Folie 13 hindurch vernetzt werden kann. Hierbei ist ebenfalls eine bekannte Vernetzungsvariante, auch Strahlung 9 oder Wärmeeinwirkung denkbar. Der Vorteil dieses Verfahrens liegt darin, dass die Schicht zumindest nach dem Vernetzen gegen Verschmutzung und chemische Einwirkung geschützt ist. Vorzugsweise ist die Folie 13 luft- bzw. gasundurchlässig. Die Folie 13 kann die Schicht 7 auch vor dem Vernetzen schützen. Auf diese Weise können beschichtete Teile vor dem Vernetzen an Lager gehalten werden. Die Schutzfolie 13 kann so ausgebildet sein, dass sie den Klebstoff vollflächig, teilweise oder gar nicht berührt. Eventuelle Hohlräume zwischen der Schutzfolie 13 und dem Klebstoff können mit Inertgas gefüllt sein. Die Schutzfolie 13 kann zudem aus einem vergleichsweise gering haftendem Klebstoff hergestellt sein.

Nach dem Vernetzen kann die Folie 13 beispielsweise für die Lagerung des beschichteten Körpers 20 längere Zeit am Körper belassen werden. Für die Montage wird die Folie 13 gemäss Figur 9 abgezogen. Die vernetzte Schicht 7' verbleibt hierbei auf dem Körper 1. Die Folie 13 ist aus einem Material hergestellt oder damit beschichtet, an dem die Haftklebstoffbasis und auch der vernetzte Haftklebstoff weniger haftet als am Körper 1. Nach dem Abziehen der Folie 13 kann das Bauteil 20' wie oben erläutert gefügt werden.

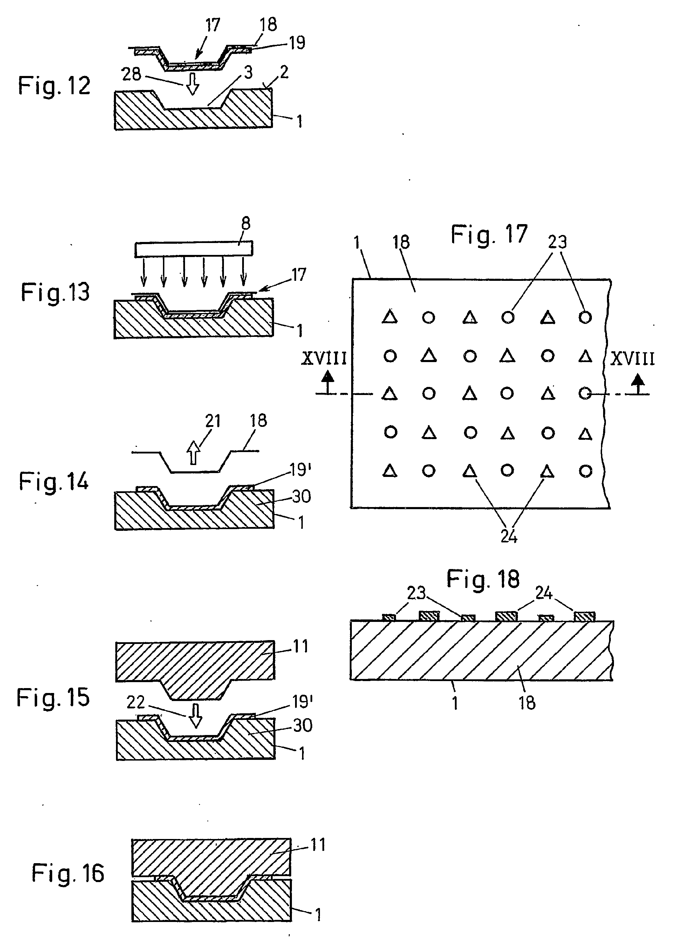

Beim Verfahren gemäss den Figuren 12 bis 16 wird die Haftklebstoffbasis mit einem Träger 17 auf den Körper 1 aufgetragen. Der Träger 17 besteht aus einem Liner 18, der beispielsweise eine Folie ist und einer Schicht 19 aus der Haftklebstoffbasis. Die Schicht 19 kann ebenfalls mit einer Breitschlitzdüse auf den Liner 18 aufgebracht werden. Denkbar ist hier aber auch ein Sprühauftrag, ein Rakelauftrag oder ein Tropfenauftrag. Für den Tropfenauftrag eignet sich beispielsweise ein berührungsloses Verfahren, beispielsweise mit einem sogenannten Bubble-Jet oder Delo-Dot.

Die Figuren 17 und 18 zeigen eine Ausführung eines Liners 18, bei dem die Haftklebstoffbasis punktförmig aufgetragen ist. Es sind hierbei unterschiedliche punktförmige Auftragsbereiche 23 und 24 vorgesehen. Diese Bereiche 23 und 24 werden durch unterschiedliche Haftklebstoffbasen oder durch ein Haftklebstoff in Kombination mit konventionellen Klebstoffen gebildet. Die Auftragsbereiche 23 und 24 können somit unterschiedliche physikalisch/technologische Eigenschaften und unterschiedliche geometrische Abmasse aufweisen. Beispielsweise kann die Dicke gemäß Figur 18 unterschiedlich sein. Die Dicke liegt beispielsweise im Bereich von 10 bis 4000 Mikrometer, vorzugsweise im Bereich von 300 bis 1000 Mikrometer. Die Bereiche 23 sind in diesem Fall weniger dick als die Bereiche 24. Alternativ oder gleichzeitig können die Bereiche 23 und 24 durch unterschiedliche Haftklebstoffe gebildet sein. Zum Beispiel kann die Haftklebstoffbasis der Bereiche 24 eine höhere Viskosität aufweisen als die Haftklebstoffbasis der Bereiche 23, der chemische Vernetzungsgrad, das chemische Vernetzungspotential, die Haftvermittler die Warmfestigkeit oder andere technologischen Eigenschaften können variieren. Denkbar ist hier aber auch ein anderer punktförmiger Bereich bzw. ein sektorieller Auftrag. Beispielsweise können die Bereiche 23 und 24 streifenförmig, kreisförmig oder gewellt sein. Das Verfahren beinhaltet den Vorteil die Eigenschaften und das Erscheinungsbild der Klebstoffflächen ideal den Anforderungen des Bauteils und der Klebverbindung anpassen zu können, wie es mit konventionellen Fügeverfahren oder Montagetechniken nicht möglich ist.

Der Träger 17 ist vorzugsweise entsprechend der Oberfläche 2 bzw. der Vertiefung 3 geformt. Vorzugsweise ist der Träger 17 bleibend verformt. Das Verformen des Träger 17 kann beispielsweise durch Tiefziehen erfolgen. Das Tiefziehen ist vor oder nach dem Auftrag der Schicht 19 möglich. Der Liner 18 kann zudem im Spritzgussverfahren mit der vorgesehenen dreidimensionalen Form hergestellt werden. Der Liner 18 besteht beispielsweise aus Kunststoff. Denkbar ist aber auch eine Ausführung aus Metall, beispielsweise Aluminium.

Der Liner kann bahn-, sowie folienförmig sein und in situ 3-D geformt werden. Der Träger 17 wird gemäss Figur 12 in Richtung des Pfeils 28 an den Körper 1 vorzugsweise mit leichtem Anpressdruck angelegt. Dies erfolgt vorzugsweise automatisiert. Da der Liner bei diesem Verfahren die Klebebereiche überragt, bzw. nicht mit dem Bauteilumrandungen bündig abschliesst, ist hier ein nachträgliches Anbringen einer kostspieligen Abziehhilfe am Liner des Klebebandes nicht mehr notwendig.

Nach dem Anlegen des Träger 17 wird die Haftklebstoffbasis der Schicht 19 vernetzt, was gemäss Figur 13 wie bereits oben erläutert mit einer Strahlung 9 oder anderen Mitteln erfolgen kann. Die Vorvernetzung kann auch vor dem Auflegen des Liners erfolgen.

Nach dem Vernetzen ist die vernetzte Schicht 19' durch den Liner 18 gegen Verschmutzung und chemische Einwirkung geschützt. Damit ist ein Bauteil 30 erstellt und dieses kann an Lager gelegt oder sofort montiert werden. Für die Montage wird der Liner 18 gemäss Figur 14 in Richtung des Pfeils 21 von der Schicht 19' abgezogen. Dies kann ebenfalls automatisiert erfolgen. Schliesslich erfolgt der Fügevorgang gemäss den Figuren 15 und 16.

Das Bauteil 10, 20 bzw. 30 ist insbesondere ein Bauteil für den Automobilbau, es sind aber auch andere Bauteile beispielsweise Gehäuse oder Gehäuseteile für Geräte, beispielsweise Sanitärgeräte möglich. Die Haftklebstoffbasis 6 kann einem solchen Bauteil nach dem Verbinden des Körpers 1 und des Teils 11 auch die Funktion einer Dichtung erfüllen. Denkbar sind alle mehrdimensionalen Körper, welche unter Nutzung dieses Verfahrens kostengünstig mit Haftklebstoffen gefügt werden können. Die Bauteile 10, 20 und 30 sind vorzugsweise montagefertig, transport- und auch lagerfähig. Die Herstellung kann teilweise oder vollständig automatisiert sein.

Die Haftklebstoffschicht, die auf das Bauteil oder den Liner aufgebracht wird, kann ein oder mehrschichtig sein. Denkbar sind z.B. eine Haftvermittlerschicht auf den Bauteil oder eine Deckschicht auf dem Klebstofffilm, der die Adhäsion auf die zu klebende Oberfläche (z.B. Automobillack) erhöht. Das Auftragsverfahren der unterschiedlichen Schichten, die Schichtdicken und die Vernetzung können gleich oder unterschiedlich sein. Insbesondere kann die Vernetzung der Klebstoffschichten gleichzeitig nach dem Gesamtauftrag oder in Stufen nach den Teilbeschichtungen erfolgen. Ein oder mehrere Schichten können geschäumt werden.

### Bezugszeichenliste

- 1: Körper
- 2: Oberseite
- 3: Vertiefung
- 4: Behälter
- 5: Breitschlitzdüse
- 6: Haftklebstoffbasis
- 7: Schicht
- 8: Vorrichtung zur Vernetzung
- 9: Strahlenquelle
- 10: Bauteil, montagebereit
- 11: Teil
- 12: Pfeil (Kraftrichtung zum Fügen)
- 13: Schutzfolie und Liner
- 14: Pfeil (Kraftrichtung Linerauftrag)

- 17: Träger
- 18: Liner
- 19: Schicht aus Haftklebstoffbasis
- 20: Beschichteter Körper
- 21: Pfeil Linerabzug

- 23: Auftragsbereich mit Haftklebstoff a
- 24: Auftragsbereich mit Haftklebstoff b

- 28: Pfeil

- 30: Bauteil

## Patentansprüche

1. Verfahren zur Herstellung eines Bauteils (10, 20, 30), das einen Körper (1) aufweist, auf dem wenigstens bereichsweise ein Haftklebstoff angeordnet ist, der permanent klebrig und klebefähig ist, mit folgenden Verfahrensschritten:
a) Bereitstellen eines Körpers (1) und einer Haftklebstoffbasis (6), die eine vergleichsweise geringe Viskosität aufweist,
b) Auftragen der Haftklebstoffbasis (6) auf den Körper (1) und
c) wenigstens teilweises Erhöhen der Viskosität durch wenigstens teilweises Vernetzen der Haftklebstoffbasis (6) bis zum Erlangen einer Viskosität, bei welcher das Bauteil (10, 20, 30) ohne weitere Vernetzung durch Kleben montierbar ist, **dadurch gekennzeichnet, dass** die aufgetragene Haftklebstoffbasis (6) durch Strahlung aktiviert wird und die weitere Vernetzungsreaktion ohne Bestrahlung verläuft und dass die Haftklebstoffbasis (6) Zusatzstoffe aufweist, die äussere Einflüsse bei der Vernetzungsreaktion verringern oder unterbinden und/oder die Haftklebstoffbasis (6) dazu mit einer Schutzfolie (13, 18) abgedeckt wird.

2. Verfahren nach Anspruch 1, **dadurch gekennzeichnet, dass** die Haftklebstoffbasis (6) direkt auf den Körper (1) aufgetragen wird.

3. Verfahren nach Anspruch 1, **dadurch gekennzeichnet, dass** die Haftklebstoffbasis (6) mittels eines Liners (18) auf den Körper (1) aufgetragen wird.

4. Verfahren nach Anspruch 1, **dadurch gekennzeichnet, dass** die Klebstoffschicht ein- oder mehrschichtig aufgebaut ist.

5. Verfahren nach Anspruch 1, **dadurch gekennzeichnet, dass** die Klebstoffschicht bzw. Klebstoffschichten zu einem Zeitpunkt oder in Stufen aufgetragen und / oder vernetzt werden, wobei unterschiedliche Vernetzungsreaktionen miteinander kombiniert werden.

6. Verfahren nach Anspruch 1, **dadurch gekennzeichnet, dass** die Haftklebstoffbasis (6) mittels einer Breitschlitzdüse (5) auf den Körper (1) aufgetragen wird.

7. Verfahren nach Anspruch 1, **dadurch gekennzeichnet, dass** die Haftklebstoffbasis (6) auf den Körper (1) aufgesprüht wird.

8. Verfahren nach Anspruch 1, **dadurch gekennzeichnet, dass** die Haftklebstoffbasis (6) durch Tropfenauftrag aufgebracht wird.

9. Verfahren nach einem der Ansprüche 1 bis 8, **dadurch gekennzeichnet, dass** die Haftklebstoffbasis (6) vor dem Auftrag vorvernetzt wird.

10. Verfahren nach Anspruch 1, **dadurch gekennzeichnet, dass** die Haftklebstoffbasis (6) durch UV-, VIS-,IR-, oder andere elektromagnetische Strahlungen oder Elektronenstrahlung vernetzt wird.

11. Verfahren nach einem der Ansprüche 1 bis 9, **dadurch gekennzeichnet, dass** die Haftklebstoffbasis (6) nach dem Vernetzen plastisch verformbar ist.

12. Verfahren nach einem der Ansprüche 1 bis 11, **dadurch gekennzeichnet, dass** die Haftklebstoffbasis (6) mit einem Zusatzstoff versehen ist.

13. Verfahren nach Anspruch 12, **dadurch gekennzeichnet, dass** der Zusatzstoff ein Füllstoff ist.

14. Verfahren nach Anspruch 12, **dadurch gekennzeichnet, dass** der Zusatzstoff ein Weichmacher oder Tackifier ist.

15. Verfahren nach Anspruch 12, **dadurch gekennzeichnet, dass** die Zusatzstoffe, äussere Einflüsse bei der Vernetzungsreaktion verringern oder unterbinden.

16. Verfahren nach Anspruch 12, **dadurch gekennzeichnet, dass** der Zusatzstoff Glaskugeln aufweist.

17. Verfahren nach einem der Ansprüche 1 bis 16, **dadurch gekennzeichnet, dass** die Haftklebstoffbasis (6) geschäumt ist oder zu einem beliebigen Zeitpunkt geschäumt wird.

18. Verfahren nach einem der Ansprüche 1 bis 17, **dadurch gekennzeichnet, dass** die Schutzfolie der Körperkontur nachgeformt ist.

19. Verfahren nach Anspruch 18, **dadurch gekennzeichnet, dass** die Schutzfolie den Klebstoff vollflächig, teilweise oder gar nicht berührt.

20. Verfahren nach einem der Ansprüche 1 bis 19, **dadurch gekennzeichnet, dass** die eventuellen Hohlräume zwischen der Schutzfolie und dem Klebstoff mit Inertgas gefüllt sind.

21. Verfahren nach Anspruch 18, **dadurch gekennzeichnet, dass** die Schutzfolie (13, 18) transparent oder teiltransparent ist.

22. Verfahren nach Anspruch 18, **dadurch gekennzeichnet, dass** die Haftklebstoffbasis (6) durch die Schutzfolie (13, 18) hindurch vernetzt wird.

23. Verfahren nach einem der Ansprüche 3 und 18 bis 22, **dadurch gekennzeichnet, dass** die Schutzfolie (13, 18) aus einem vergleichsweise gering haftenden Werkstoff hergestellt ist, oder beschichtet ist.

24. Verfahren nach Anspruch 3, **dadurch gekennzeichnet, dass** der Liner (18) wenigstens bereichsweise einer Fläche (2) des Körpers (1) konturgenau nachgeformt ist.

25. Verfahren nach Anspruch 24, **dadurch gekennzeichnet, dass** der Liner (18) tiefgezogen ist.

26. Verfahren nach Anspruch 3, **dadurch gekennzeichnet, dass** der Liner (18) mehrdimensional vorgeformt ist.

27. Verfahren nach Anspruch 3, **dadurch gekennzeichnet, dass** der Liner (18) bleibend mehrdimensional verformt ist bzw. verformt wird.

28. Verfahren nach Anspruch 3, **dadurch gekennzeichnet, dass** der Liner (18) thermisch verformt wird.

29. Verfahren nach Anspruch 3, **dadurch gekennzeichnet, dass** die Haftklebstoffbasis (6) im Wesentlichen gleichmässig auf dem Liner (18) angeordnet ist.

30. Verfahren nach Anspruch 3, **dadurch gekennzeichnet, dass** die Haftklebstoffbasis (6) partiell oder sektoriell auf dem Liner (18) angeordnet ist.

31. Verfahren nach Anspruch 30, **dadurch gekennzeichnet, dass** die Haftklebstoffbasis (6) punktförmig oder linienförmig auf dem Liner (18) angeordnet ist.

32. Verfahren nach einem der Ansprüche 1 bis 31, **dadurch gekennzeichnet, dass** auf dem Körper (1) oder auf einem Träger (17) mehrere unterschiedliche Haftklebstoffbereiche (23, 24) oder eine Kombination aus mindestens einem Haftklebstoff und konventionellem Klebstoff aufgetragen werden.

33. Verfahren nach Anspruch 1, **dadurch gekennzeichnet, dass** der Auftrag der Haftklebstoffbasis diskontinuierlich erfolgt.

34. Verfahren nach einem der Ansprüche 1 bis 33, **dadurch gekennzeichnet, dass** die Oberfläche des Körpers (1) wenigstens bereichsweise vor dem Auftragen der Haftklebstoffbasis zur Haftverbesserung modifiziert wird.

## Claims

1. A method for producing a component (10, 20, 30) having a body (1) on which at least in regions a pressure-sensitive adhesive is disposed, the adhesive being permanently sticky and capable of adhesion, the method having the following steps:
a) providing a body (1) and a pressure-sensitive adhesive base (6) having a relatively low viscosity,
b) applying the pressure-sensitive adhesive base (6) to the body (1) and
c) at least partly increasing the viscosity by at least partially cross-linking the pressure-sensitive adhesive base (6) until a viscosity is reached at which the component (10, 20, 30) is capable of being mounted by adhesion without further cross-linking, **characterized in that** the applied pressure-sensitive adhesive base (6) is activated by radiation, **in that** the further cross-linking reaction proceeds without irradiation, and **in that** the pressure-sensitive adhesive base (6) comprises additives that reduce or prevent external influences during the cross-linking reaction, and/or **in that** the pressure-sensitive adhesive base (6) is lined with a protective film (13, 18) for this purpose.

2. The method of claim 1, **characterized in that** the pressure-sensitive adhesive base (6) is applied directly to the body (1).

3. The method of claim 1, **characterized in that** the pressure-sensitive adhesive base (6) is applied to the body (1) by means of a liner (18).

4. The method of claim 1, **characterized in that** the adhesive layer is of single-layer or multilayer construction.

5. The method of claim 1, **characterized in that** the adhesive layer(s) are applied and/or crosslinked at one time or in stages, with different crosslinking reactions being combined with one another.

6. The method of claim 1, **characterized in that** the pressure-sensitive adhesive base (6) is applied to the body (1) by means of a slot die (5).

7. The method of claim 1, **characterized in that** the pressure-sensitive adhesive base (6) is applied to the body (1) by spraying.

8. The method of claim 1, **characterized in that** the pressure-sensitive adhesive base (6) is applied by application of drops.

9. The method of one of claims 1 to 8, **characterized in that** the pressure-sensitive adhesive base (6) is precrosslinked prior to application.

10. The method of claim 1, **characterized in that** the pressure-sensitive adhesive base (6) is crosslinked by UV, VIS, IR or other electromagnetic radiation or electron beams.

11. The method of one of claims 1 to 9, **characterized in that** the pressure-sensitive adhesive base (6) after crosslinking is plastically deformable.

12. The method of one of claims 1 to 11, **characterized in that** the pressure-sensitive adhesive base (6) has been provided with an additive.

13. The method of claim 12, **characterized in that** the additive is a filler.

14. The method of claim 12, **characterized in that** the additive is a plasticizer or tackifier.

15. The method of claim 12, **characterized in that** the additives reduce or prevent external influences during the crosslinking reaction.

16. The method of claim 12, **characterized in that** the additive comprises glass beads.

17. The method of one of claims 1 to 16, **characterized in that** the pressure-sensitive adhesive base (6) has been foamed or is foamed at any desired time.

18. The method of one of claims 1 to 17, **characterized in that** the protective film is shaped according to the contour of the body.

19. The method of claim 18, **characterized in that** the protective film contacts the body over the full area, partially or not at all.

20. The method of one of claims 1 to 19, **characterized in that** any cavities which may exist between the protective film and the adhesive have been filled with inert gas.

21. The method of claim 18, **characterized in that** the protective film (13, 18) is transparent or part-transparent.

22. The method of claim 18, **characterized in that** the pressure-sensitive adhesive base (6) is crosslinked through the protective film (13,18).

23. The method of one of claims 3 and 18 to 22, **characterized in that** the protective film (13, 18) is produced from a material having comparatively low adhesion, or has been coated.

24. The method of claim 3, **characterized in that** the liner (18) is shaped at least in regions to the precise contour of an area (2) of the body (1).

25. The method of claim 24, **characterized in that** the liner (18) has been thermoformed.

26. The method of claim 3, **characterized in that** the liner (18) has been multidimensionally preshaped.

27. The method of claim 3, **characterized in that** the liner (18) has been or is permanently multidimensionally deformed.

28. The method of claim 3, **characterized in that** the liner (18) is deformed thermally.

29. The method of claim 3, **characterized in that** the pressure-sensitive adhesive base (6) is disposed substantially uniformly on the liner (18).

30. The method of claim 3, **characterized in that** the pressure-sensitive adhesive base (6) is disposed partially or sectorially on the liner (18).

31. The method of claim 30, **characterized in that** the pressure-sensitive adhesive base (6) is disposed punctiformly or linearly on the liner (18).

32. The method of one of claims 1 to 31, **characterized in that** to the body (1) or to a support (17) there are applied two or more different pressure-sensitive adhesive regions (23, 24) or a combination of at least one pressure-sensitive adhesive and conventional adhesive.

33. The method of claim 1, **characterized in that** the application of the pressure-sensitive adhesive base takes place discontinuously.

34. The method of one of claims 1 to 33, **characterized in that** the surface of the body (1) at least in regions, prior to the application of the pressure-sensitive adhesive base, is modified for improved adhesion.

## Revendications

1. Procédé de production d'un composant (10, 20, 30) qui comporte un corps (1) sur lequel est disposée au moins par zones une colle auto-adhésive qui est collante et collable en permanence, avec les étapes de procédé suivantes :
a) mise à disposition d'un corps (1) et d'une base de colle auto-adhésive (6) qui présente une viscosité comparativement faible,
b) application de la base de colle auto-adhésive (6) sur le corps (1) et
c) augmentation au moins partielle de la viscosité par réticulation au moins partielle de la base de colle auto-adhésive (6) jusqu'à l'obtention d'une viscosité avec laquelle le composant (10, 20, 30) peut se monter par collage, sans réticulation supplémentaire, **caractérisé en ce qu'**on active la base de colle auto-adhésive (6) appliquée par rayonnement et **en ce que** la réaction de réticulation supplémentaire se passe sans rayonnement et **en ce que** la base de colle auto-adhésive (6) comporte des additifs qui réduisent ou empêchent des influences extérieures lors de la réaction de réticulation et/ou **en ce qu'**à cet effet, on recouvre la base de colle auto-adhésive (6) avec un film protecteur (13, 18).

2. Procédé selon la revendication 1, **caractérisé en ce qu'**on applique la base de colle auto-adhésive (6) directement sur le corps (1).

3. Procédé selon la revendication 1, **caractérisé en ce qu'**on applique la base de colle auto-adhésive (6) sur le corps (1) au moyen d'un liner (18).

4. Procédé selon la revendication 1, **caractérisé en ce que** la couche de colle est de structure monocouche ou multicouches.

5. Procédé selon la revendication 1, **caractérisé en ce qu'**on applique et/ou on réticule la couche de colle ou les couches de colle en un même moment ou par étapes, en associant entre elles différentes réactions de réticulation.

6. Procédé selon la revendication 1, **caractérisé en ce qu'**on applique la base de colle auto-adhésive (6) sur le corps (1) au moyen d'une filière plate (5).

7. Procédé selon la revendication 1, **caractérisé en ce qu'**on vaporise la base de colle auto-adhésive (6) sur le corps (1).

8. Procédé selon la revendication 1, **caractérisé en ce qu'**on applique en gouttes la base de colle auto-adhésive (6) sur le corps.

9. Procédé selon l'une quelconque des revendications 1 à 8, **caractérisé en ce qu'**avant l'application, on réticule préalablement la base de colle auto-adhésive (6).

10. Procédé selon la revendication 1, **caractérisé en ce qu'**on réticule la base de colle auto-adhésive (6) par rayonnements UV, rayonnements VIS, rayonnements IR ou par d'autres rayonnements électromagnétiques ou par faisceau électronique.

11. Procédé selon l'une quelconque des revendications 1 à 9, **caractérisé en ce qu'**après la réticulation, la base de colle auto-adhésive (6) est plastiquement déformable.

12. Procédé selon l'une quelconque des revendications 1 à 11, **caractérisé en ce que** la couche de colle auto-adhésive (6) est dotée d'un additif.

13. Procédé selon la revendication 12, **caractérisé en ce que** l'additif est une matière de charge.

14. Procédé selon la revendication 12, **caractérisé en ce que** l'additif est un plastifiant ou un agent poisseux.

15. Procédé selon la revendication 12, **caractérisé en ce que** les additifs réduisent ou empêchent des influences extérieures lors de la réaction de réticulation.

16. Procédé selon la revendication 12, **caractérisé en ce que** l'additif comporte des billes de verre.

17. Procédé selon l'une quelconque des revendications 1 à 16, **caractérisé en ce que** la couche de colle auto-adhésive (6) est moussée ou **en ce qu'**on la mousse à un moment quelconque.

18. Procédé selon l'une quelconque des revendications 1 à 17, **caractérisé en ce que** le film protecteur est postformé selon les contours du corps.

19. Procédé selon la revendication 18, **caractérisé en ce que** le film protecteur touche la colle à pleine surface, en partie ou ne la touche pas du tout.

20. Procédé selon l'une quelconque des revendications 1 à 19, **caractérisé en ce que** les cavités éventuelles entre le film protecteur et la colle sont remplies de gaz inerte.

21. Procédé selon la revendication 18, **caractérisé en ce que** le film protecteur (13, 18) est transparent ou partiellement transparent.

22. Procédé selon la revendication 18, **caractérisé en ce qu'**on réticule la base de colle auto-adhésive (6) à travers le film protecteur (13, 18).

23. Procédé selon l'une quelconque des revendications 3 et 18 à 22, **caractérisé en ce que** le film protecteur (13, 18) est fabriqué en un matériau comparativement de faible adhérence ou revêtu de ce dernier.

24. Procédé selon la revendication 3, **caractérisé en ce que** le liner (18) est postformé au moins par zones selon les contours précis d'une surface (2) du corps (1).

25. Procédé selon la revendication 24, **caractérisé en ce que** le liner (18) est embouti.

26. Procédé selon la revendication 3, **caractérisé en ce que** le liner (18) est préformé en plusieurs dimensions.

27. Procédé selon la revendication 3, **caractérisé en ce que** le liner (18) est déformé ou **en ce qu'**on le déforme de manière permanente en plusieurs dimensions.

28. Procédé selon la revendication 3, **caractérisé en ce qu'**on thermoforme le liner (18).

29. Procédé selon la revendication 3, **caractérisé en ce que** la base de colle auto-adhésive (6) est disposée de manière sensiblement régulière sur le liner (18).

30. Procédé selon la revendication 3, **caractérisé en ce que** la base de colle auto-adhésive (6) est disposée de manière partielle ou sectorielle sur le liner (18).

31. Procédé selon la revendication 30, **caractérisé en ce que** la base de colle auto-adhésive (6) est disposée de manière ponctuelle ou linéaire sur le liner (18).

32. Procédé selon l'une quelconque des revendications 1 à 31, **caractérisé en ce que** sur un corps (1) ou sur un support (17), on applique plusieurs zones de colle auto-adhésive (23, 24) différentes ou une association d'au moins une colle auto-adhésive et de colle conventionnelle.

33. Procédé selon la revendication 1, **caractérisé en ce que** l'application de la base de colle auto-adhésive s'effectue de manière discontinue.

34. Procédé selon l'une quelconque des revendications 1 à 33, **caractérisé en ce qu'**on modifie la surface du corps (1) au moins par zones avant l'application de la base de colle auto-adhésive, pour en améliorer l'adhérence.
